Europäisches Patentamt

(19) European Patent Office

Office européen des brevets

(11) Publication number: **0 234 950**
**B1**

# EUROPEAN PATENT SPECIFICATION

(12)

(45) Date of publication of the patent specification:
31.01.90

(51) Int. Cl.⁴: **F16L 5/02**, F16L 13/11

(21) Application number: 87301754.5

(22) Date of filing: 27.02.87

(54) **Wall feedthrough.**

(30) Priority: 28.02.86  GB 8605082

(43) Date of publication of application:
02.09.87 Bulletin 87/36

(45) Publication of the grant of the patent:
31.01.90 Bulletin 90/5

(84) Designated Contracting States:
AT BE CH DE ES FR GB IT LI NL SE

(56) References cited:
EP-A- 0 122 784
EP-A- 0 181 945
FR-A- 2 370 221
GB-A- 1 245 119
GB-A- 1 485 397

(73) Proprietor: N.V. RAYCHEM S.A., Diestsesteenweg 692,
B-3200 Kessel-lo(BE)

(72) Inventor: Brusselmans, Jaques Hubert Francois, 15 Rue
Bourgemestre Dandoy, B-5950 Orp- Jauche(BE)
Inventor: Nolf, Jean-Marie Etienne, 6, Chaussee de
Namur, B-5990 Hamme-Mille(BE)

(74) Representative: Auckland, Jacqueline et al, Raychem
Limited Intellectual Property Law Department Faraday
Road Dorcan, Swindon, Wiltshire SN3 5HH(GB)

## Description

The present invention relates to the sealing of a space between a hollow member and a duct through which it passes. Preferably, the duct is a hole through a wall or other bulkhead, and the hollow member is what is well known as a feedthrough. The duct may, however, be a conduit through which a cable or other supply line passes, in which case the hollow member is what is well known as a duct seal. The basic functions to be carried out are the same in each case, although the design of the articles differ; the present invention is primarily applicable to feedthroughs.

Where a cable passes through a wall, particularly where a buried cable enters a building below ground level, it will be desirable to seal any annular space between the cable and the periphery of the hole in the wall through which it passes. The reason is of course to prevent water, dirt or other contaminants from entering the house or to prevent heat leaving the building. Similarly, such seals are desirable where cables enter man-holes, particularly to prevent the man-hole flooding.

If the cable that is to enter the building could be provided when the building is being built and if later replacement of the cable were not envisaged, the cable could simply be built into the wall, or more precisely the wall could be build around the cable. That, of course, is not practical and it is therefore generally necessary that cables can be sealed within a hole through a wall after the wall has been built. The solution is. to provide through the wall a device called a feedthrough. The original problem has now been resolved into two simpler problems, namely how to seal the feedthrough to the wall, and how to seal the cable within the feedthrough. Many new buildings are built with feedthroughs cast into their walls. The feedthroughs are initially temporarily blocked, and when the cable is to be supplied to the building the block is removed, the cable fed through the feedthrough, and the feedthrough sealed to the cable. In old buildings, a hole is drilled through the wall, the feedthrough inserted into the wall and sealed to it, the cable inserted through the feedthrough, and finally the feedthrough sealed to the cable. A seal between the feedthrough and the cable is easy to make, as will be seen from the following prior art description.

A highly successful feedthrough is disclosed and claimed in GB 1245119 (Raychem Corporation). There, a central portion of a tubular conduit member is sealed within a hole in a wall, such that end parts of the conduit member project from respective sides of the wall. Each end part of the conduit member being of heat-recoverable material and being capable of shrinking diametrically upon the application of heat alone, and optionally being provided with an inner coating of an adhesive. The central portion is fabricated such that shrinkage thereof does not occur when the end parts are heated to cause their recovery. For example, the central part may be produced by shrinking a tube over a reinforcing member such as a coil spring, which will give the member a helically ribbed surface. Where the conduit member is to be sealed through a wall that has already been built, it will preferably be provided on its outer surface with an adhesive, and mortar or concrete or similar substance is packed around the conduit member to seal it in the hole in the wall. After it is sealed in the wall, a cable for example is passed through it and its end parts are heated to cause them to shrink down into engagement with the cable, thereby forming a seal.

Whilst this design design can produce excellent results and has been widely used, some difficultites can arise under particularly unfavourable conditions in ensuring a seal between the central portion and the wall.

We have now designed a sealing device that can produce excellent sealing under most conditions likely to be encountered.

Thus, the present invention provides a device which can be sealed to a duct through which it passes, which comprises:

a hollow member that can be positioned within the duct, which hollow member then provides a passage through the duct; and

a mesh for mechanically retaining a sealing material that seals a space between the hollow member and the duct;

said mesh being capable of mechically retaining the sealing material on an outer surface of the hollow member and being capable of allowing deformation of the sealing material to a configuration to seal the space between the hollow member and the duct, preferably by allowing deformation of the sealing material to a configuration of greater extension away from the said outer surface of the hollow member.

By mechanically retaining we exclude retention solely by virtue of adhesion to the outer surface and cohesive strength of the sealing material. We require some mechanical retaining means, namely a mesh, although adhesion and cohesive strength may play a part. In many instances the sealing material will set by drying or otherwise curing, and it will lack a high adhesion and high cohesive strength during installation of the device.

The invention also provides a method of sealing a duct, which comprises:

applying a sealing material to an outer surface of a hollow member;

mechanically retaining said sealing material on the outer surface by a mesh:

positioning the hollow member and the sealing material within the duct; and

deforming the sealing material to a configuration, preferably a configuration of greater extension away from the said surface, to seal a space between the surface and the duct.

The means for retaining is preferably capable of retaining a material having a plasticity of from 2 and 28, more preferably from 5–25, particularly 8–20, especially 10–15 cm as measured by the Cone D'Abrams test. This test is performed with a mould in the shape of a truncated cone open at both extremities, having a large base diameter of 20 cm, a small base diameter of 10 cms and a height of 32 cm. The mould is palced on a flat surface with the large base at the bottom. The mould is filled with the sealing material in four steps, between each of which the sealing material is compacted with a steel rod of 12mm diameter. Three minutes after filling the mould is removed, and the extent to which the resulting truncated cone of sealing material sags is measured, The extent of sagging (ie form the original mould height to the top of the sagged material) in centimetres is the plasticity.

The man skilled in the art will now be able to design a retaining means that is capable of retaining a material having a plasticity within the ranges given above, and which is capable of allowing such a material to be deformed as required. In particular he will be able to design a retaining means in the form of a mesh, for example a net (or other perforated three-dimensional structure) that has suitable pore size. Thus we prefer that the pore size allows the mesh to retain the sealing material of the preferred plasticity against gravity or against accidential jogs or other rough handling, but allows passage of sealing material through the pores under intentional deformation as specified above, preferably under intentional deformation by hand.

Where the mesh comprises a net, we prefer its pore size to be such that its material occupies from 0.5-8, especially 1-4, particularly 1.5 - 3% of its overal surface area. The pore size preferably varies from 7.5-120, more preferably 15-60, especially 20-90mm². The net preferably has a thickness of from 0.5-2, more preferably 0.8-1.2, especially 0.9-1.1 mm, and is preferably flexible, especially highly flexible to deformation by hand. The mesh is preferably of such a size that it can hold around the hollow member from 150-400, more preferably 220-320cm³ of sealing material. The volume of sealing material will of couse depend on the size of the duct and on the size, where appropriate, of the cable to pass through it.

Where the mesh comprises a foam, the foam preferably has a density of from 5–60, mor preferably 10–40, especially 15–30 kg/m³. In general, the volume of material is preferably from 0.5–8%, more preferably 1–4% especially 1.5–3% of the volume of the foam. The foam is preferably capable of holding from 150–400, more preferably 220–320, especially 220–320 cm³ of sealing material. The average pore size of the foam is preferably from 1–10mm, more preferably from 2–6 mm, especially from 3–5mm. In general a foam of thickness 5–15, preferably 8–10 will be suitable.

The mesh particularly when it comprises a foam, may be pre-impregnated with the sealing material. Where the sealing material is to set after installation, means is preferably provided to prevent premature setting before positioning of the foam around the hollow member and positioning of the hollow member in the duct. For example, if the sealing material sets in air, the impregnated foam may be sealed in an air-tight container. Where the material requires water to set, it may be supplied impregnated in the foam and sealed against water vapour.

The sealing material is preferably sealed from the environment by a temporary sealing means such as an openable box or rupturable bag.

The sealing material is preferably a material that is plastic when the device is installed and thereafter becomes hard. Hardening preferably occurs under the agency of air or water. In particular it preferably comprises cement, such as mortar used in the building industry which may additionally include other material such as sand.

Means for deforming the sealing material to its new configuration may be provided as part of the device. For example, the means for deforming and the means for retaining may be parts of a single structure, or a single part may perform both functions. In particular the means for retaining can retain the sealing material on the surface against the force of gravity or any jolts the article may receive during installation (the sealing material may for example be wet cement, which is easily displaced), but will not prevent intentional displacement when the device has been inserted within the duct. In this case the means for retaining may comprise, for example, a mesh through which the sealing material will not pass until it is intentionally forced therethrough. By mesh, as used herein, we include foams and other such structures as well as nets, since they can be regarded as a net in three dimensions. After the device has been inserted in the duct, the sealing material may be compressed longitudinally, which will cause it to extend further radially, ie in a direction further away from the surface, thus sealing a space between the surface and the duct.

The longitudinal compression may result from deformation of the means for retaining, hence both functions may be carried out by the same structure. One way in which this longitudinal compression may be achieved is by radially compressing the sealing material at one or both ends, for example by shrinking a heat-shrinkable sleeve over the sealing material and optionally the means for retaining, thus driving the sealing material towards a central portion of the device. We prefer however that the sealing material is deformed by reducing the effective length of the means for retaining. This may be done by contracting in length the means for retaining. For example, if the means for retaining comprises a mesh within or under which the sealing material is trapped, one end of the mesh (together with any end member provided) may be moved towards the other end, with the mesh in between optionally buckling to accomodate the reduction in length. This action will force the sealing material outwards, through the interstices of the mesh to form a seal between the hollow member and the duct.

We prefer that an end member (as mentioned above) be provided, optionally as part of the means for retaining and/or the means for deforming, as follows. An end member, for example in the form of a ring, may be provided around the hollow member which is preferably in the form of a generally cylindrical tube. The inside diameter of the ring should be the same or only slightly larger than the outer diameter of the hollow member, such that the ring is free to slide along the hollow member. The outer diameter of the ring is not critical but we prefer that it is slightly larger than the diameter of the duct; however, this need not be so, especially if an end portion of the means for retaining is impermeable or highly resistant to passage of the sealing material. In such a situation a separate end member need not be provided. One end portion of the means for retaining, which preferably comprises a tubular net is attached to the ring, so that the ring lies within and concentric with the end portion. The net and the ring now form a cylinder with a closed end around the hollow member, and the space so defined is filled with sealing material. The other end of the net (ie the end opposite to that fixed to the ring) is then fixed to the surface of the hollow member or to a second ring which in turn is fixed to the hollow member. That other end may be fixed by any suitable means such as a hose clamp or tie wrap.

It can now be seen that the action of sliding the ring along the hollow member towards the fixed other end of the net, will cause the sealing material to be deformed. Since its length is being reduced, its thickness around the hollow member must increase. It is therefore being deformed to a configuration of greater extension away from the surface, and that is what is required in order that the duct be sealed. The space within the net and around the hollow member may be filled with sealing material in any suitable way. For example the sealing material may be poured or otherwise placed through said other end of the net, before it is fixed to the hollow member with a tie wrap or whatever. A second possibility is that it is forced through the interstices of the mesh. This is preferred where the mesh comprises a foam, particularly where it comprises a foam of significant thickness that contacts the surface of the hollow member along the foam's length such the sealing material is retained substantially entirely within its interstices rather than being merely trapped between it and the surface of the hollow member. A further possibility, particularly applicable where the retaining means comprises a net (essentially a two dimensional mesh) is to apply the sealing material to the surface of the hollow member with the net turned inside-out so that it extends from the ring away from the portion of the hollow member where the sealing material is to be placed. With the sealing material in position, the net is turned back on itself to cover the sealing material. This may be difficult to do as described (there is a short time when the sealing material is not retained) and in practice it is preferred that a small portion of sealing material be positioned at the end of the net and the net rolled back bit-by-bit as more and more sealing material is added.

The embodiment of the invention just described may be used as follows. After placing the sealing material in position, the article is inserted into a duct to an extent that the ring contacts the end of the duct. As mentioned above, we prefer that the outer diameter of the ring is larger than the duct, in which case the ring may act as a stop against further insertion, either in conjunction with the mesh or with a stop means on the hollow member which limits movement of the ring relative to the hollow member. The ring (which is able to slide along the hollow member) is then held against the end of the duct and the hollow member is pulled a certain distance back out of the duct so that it slides through the ring (it will in general still extend along some or all of the duct). Said other end of the mesh is fixed to the hollow member and moves with it. Thus, the length defined by the mesh for retaining the sealing material is reduced and the sealing material is forced outwards to seal the duct. Some sealing material may exude from the end of the duct between it and the ring, and this may be taken as an indication to stop pulling on the hollow member.

The installation may then be complete, although the sealing material may have to dry, cure or otherwise set before a functional seal is obtained. It may be desirable that pressure be exerted on the sealing material, compressing it longitudinally and thus forcing it against the hollow member and the duct, during the setting period. Therfore means is preferably provided to resist the holow member sliding back into the duct, ie to resist further relative movement between the ring and hollow member at least in one direction. It may be desirable to provide a resilient bias in the opposite direction while the sealing material sets. Relative movement between the ring and the hollow member may be resisted by for example a wedge, by taping, by a tie wrap or by a ratchet or other catch on the ring that engages a series of depressions in or protrusions on the hollow member.

When the sealing material has set, if required, a cable or other object may be passed through the hollow member, after removing any temporary blocking plugs if provided. Then, a seal has to be made between the hollow member and the cable, analogous to the seal made between the duct and the hollow member. The hollow member, however, may project from one or both end of the duct and thus an outer surface thereof is available. (This would not be so in the case of a duct that was simply a hole in a wall.) A seal may be made between the hollow member and the cable by means of heat-shrinkable (or other recoverable) tubing. For example a heat-shrinkable tube may be slid over the hollow member and the cable so that it bridges them, and then shrunk down. In another embodiment, the ends of the hollow member are themselves heat-shrinkable, and can therefore be directly sealed to a cable that passes through.

We prefer that the hollow member comprises a feedthrough of the general type disclosed in GB 1245119, referred to above. Thus, it may comprise a support member, such as a coil of material for example metal, and a heat-shrinkable tube positioned therover, preferably by shrinking a central part down onto the coil leaving end portions still shrinkable. The central portion of the hollow member may therefore have a helically ribbed surface. Such a surface may aid retention of the sealing material, and may provide a series of depression or protrusions onto which a ratchet of the ring may engage as mentioned above. The support member need not be in the form of a coil, but could have other forms, for example it could comprise a series of rings or a simple tube etc.

It may be desirable that a cable secured within a duct by an article of the invention be removed, and the same or a different cable resealed in the duct using the same feedthrough article. This process is called "re-entry". Where the cable is sealed to the ends of the hollow member by a heat-shrunk end thereof, it may be desirable that the shrunk part can be cut away, the cable replaced, and a new seal be made by shrinking the new end of the hollow member that was produced by cutting away the original end. Where the hollow member comprises a support member and surrounding shrinkable tube it may be desirable that an end portion (or portions) of the support member be removable in order that further lengths of the shrinkable tube are able to be shrunk down onto the new cable. Thus, where the support member comprises a coil, the coil may be in two or more parts (or have a regin of weakness), such that one part may be removed leaving another part in place to provide rigidity, for example, to a central portion of the article during service. The two (or more) parts of the coil may simply be formed by cutting one coil, but we prefer that the ends of the parts of the coil be specially shaped for abutting (for example they may terminate in a full circle) or that a guide be provided to align the parts. Such a guide may comprise a tube within which the ends of the parts of the coil are positioned. The tube may have an internal protrusion against which each part of the coil abuts. Such a guide serves also to provide a localized ridge in the outer shrinkable tube that is shrunk over the coil. That ridge may provide a stop limiting the movement of the moveable ring that was referred to above.

The invention is further illustrated with reference to the accompanying drawings, in which

Figure 1 shows a prior art wall feedthrough;
Figures 2-7 shows the installation of a first embodiment of wall feedthrough according to the invention;
Figure 8 shows a second embodiment of the invention;
Figures 9-11 show re-entry of a feedthrough of the invention;
Figures 12 and 13 shows a preferred hollow member;
Figure 14 shows a modification of the first embodiment;
Figure 15 shows a third embodiment; and
Figure 16 shows a slidable ring and means for restricting sliding.

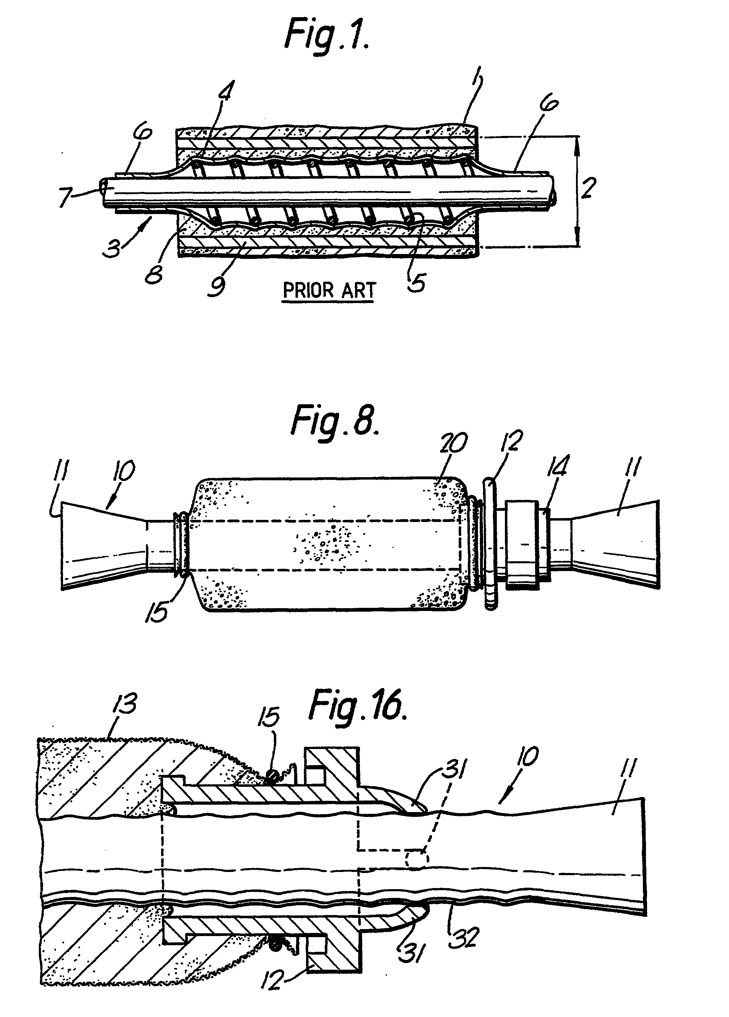

Figure 1 shows a prior art feedthrough, as disclosed in GB 1245119 and which may be modified by the incorporation of a means for retaining to produce an article of the present invention. A wall 1 is shown having a duct 2 (in this case a simple hole) therethrough, within which the feedthrough 3 is positioned. The feedthrough 3 comprises a heat-recoverable tube 4 shrunk over an internal support 5, in the form of a coil spring. End portions 6 of the tube 4 are shrunk down into sealing engagement with a cable 7 that passes through the feedthrough. The tube 4 may be coated on its external surface with an adhesive 8 (for example a moisture activated adhesive) and the remaining space between the feedthrough and the wall 1 sealed by cement 9.

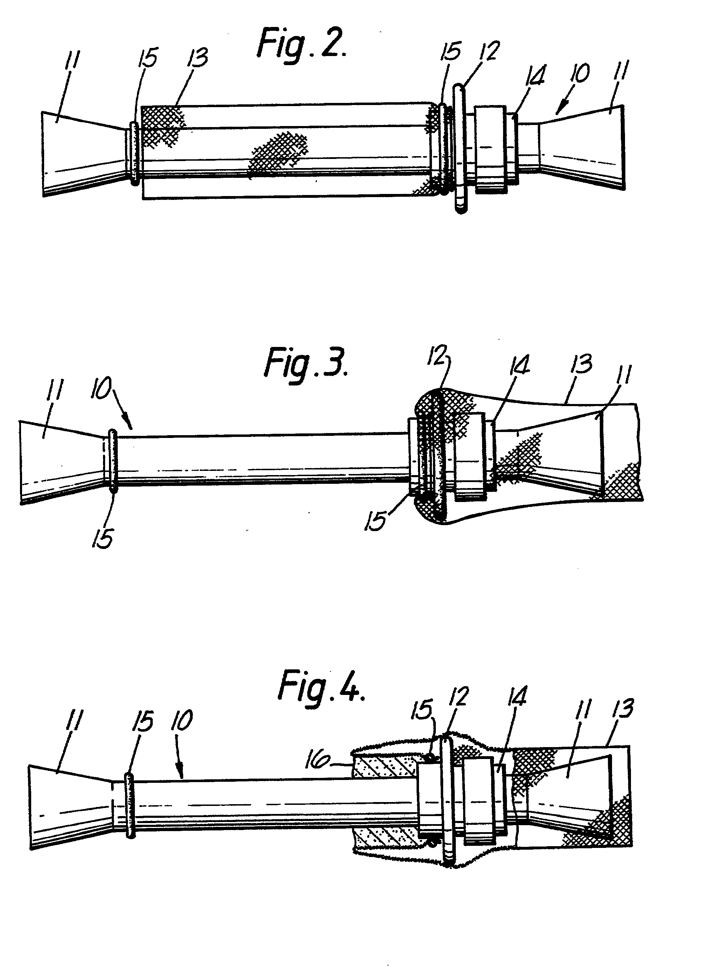

Articles according to the invention are shown in a sequence of installation steps in Figures 2-7.

Figure 2 shows a hollow member 10 having recoverable, preferably heat-shrinkable ends 11. In the embodiment shown the ends 11 are flared and are integral with a central portion of the hollow member. They need not however be flared and separate recoverable tubes may be used to seal a central portion to a cable that may pass through it. The ends may be internally coated with a sealing material, preferably a hot-melt adhesive in which case a single heating step causes shrinkage and adhesive-activation thus forming a good seal to a cable passing therethrough. A slidable ring 12 is provided around the hollow member 10 to which is secured, for example by a tie wrap, hose clamp or recoverable or elastomeric band etc., a means for retaining 13. The means for retaining is preferably a mesh, such as the substantially two dimensional net shown here. The mesh may be in tubular form or it could be in sheet form and wrapped around the hollow member and ring 12. A stop ring or other protrusion 14 may be provided to limit movement of the ring 12 and net 13 to the right as drawn. A tie ring 15 or other means for securing the left hand end of the net 13 may be provided around the hollow member 10.

In Figure 3 the net 13 is shown turned inside-out so that it leaves a central portion of the hollow member 10 uncovered.

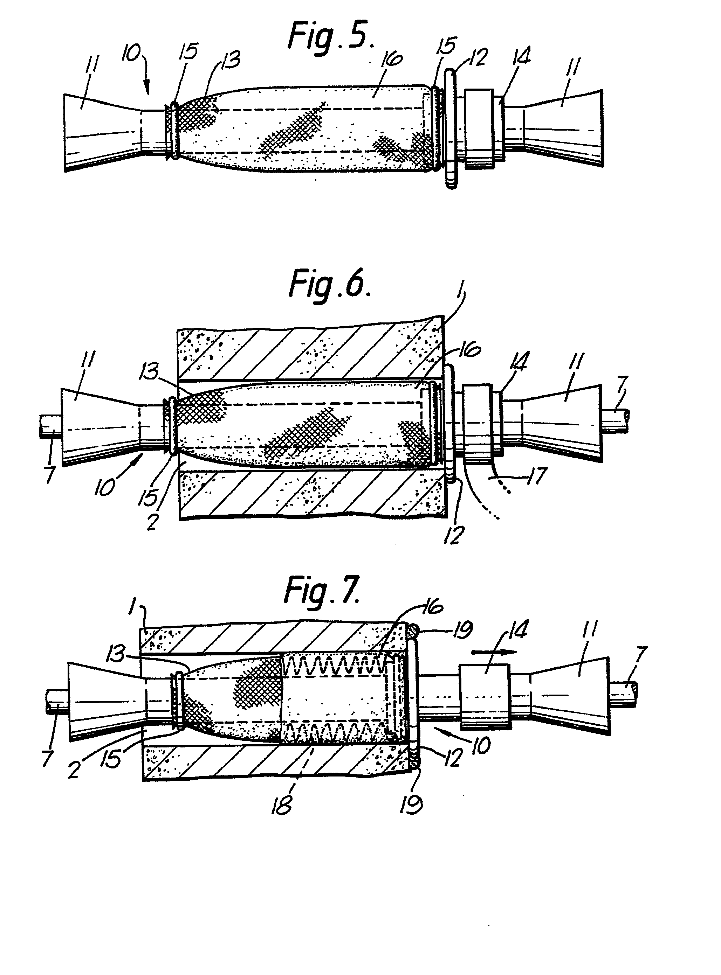

Figure 4 shows a way in which a sealing material 16, preferably cement especially after mixing with water to a dough-like consistency, may be applied to the hollow member 10. A little cement 16 may be applied and the net 13 gradually rolled back bit-by-bit to cover it, or bit-by-bit to provide a small hollow which is then filled with cement 16. In this way a large volume of cement 16 is never unsupported. Where the cement 16 or other sealing material has greater cohesiveness a full length of it along the hollow member may remain in position long enough for a sheet of net to be wrapped around it, rather than a tubular net applied in the way described.

When all of the cement 16 desired has been applied and consequently the net fully rolled back, the tie wrap 15 may be used to secure the left hand end of the net 13 as shown in Figure 5. The cement 16 may now, if desired, be massaged by hand and optionally further wetted, in order to ensure a uniform shape and correct diameter and to remove any air that may be trapped within it. It may be found useful to provide the cement with a slight taper to facilitate insertion of the device loaded with cement into a duct.

The device is shown in Figure 6 positioned within a duct 2 in a wall 1. At this stage a tape 17 may be removed that may have previously been used to prevent the slidable ring 12 from sliding to the left away from the stop ring 14. A cable 7 is shown passing through the device, which it is the function of the device to seal to the wall 1.

The next stage of the installation procedure is shown in Figure 7. The slidable ring 12 is held against the wall 1 (it preferably has a larger outer diameter than that of the duct 2 to facilitate this operation), and the hollow member is pulled (or pushed) to the right as shown by the arrow. The hollow member is preferably twisted a few degrees clockwise-anticlockwise etc as it is pulled. The effect of this pulling is to draw the fixed end of the net 13, fixed by means of a tie wrap 15, towards the slidable ring 12, thereby reducing the length along the hollow member that can be occupied by the cement 16. The net 13 may buckle as shown at 18 or otherwise accommodate a reduction in length, or it may move to the right out from the duct 2 as the hollow member 10 moves to the right. The reduction in the length of the volume of cement 16 causes the cement to be displaced away from the surface of the hollow member and the wall. Sufficient movement of the hollow member may be indicated by the cement exuding between the wall and the ring 12 as shown at 19. The cement 16 is then allowed to set. It may be desirable to retain the cement under some compression while it sets. This can be done by ensuring that the hollow member retains some resilient bias to the right hand side relative to the slidable ring 12.

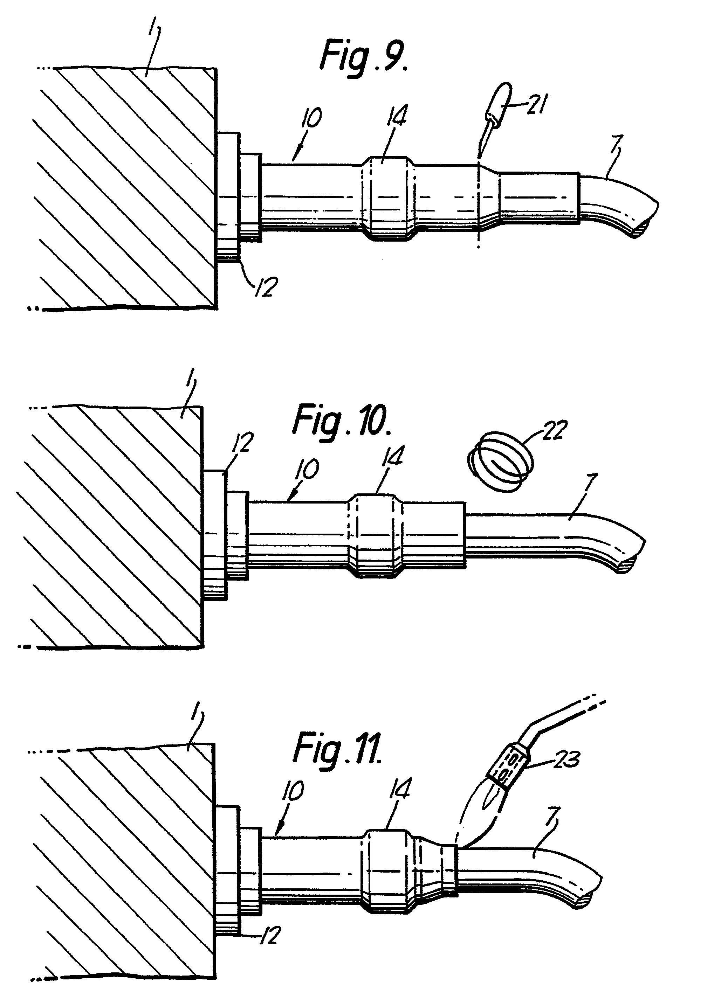

Figure 8 shows a second embodiment of the invention where a foam 20 is used rather than a substantially two-dimensional net. The foam may be impregnated with sealing material, for example cement, simply by applying the sealing material to it by hand and massaging it if necessary. A suitable foam is an open cell foam of very large cell size, for example polyurethane foam of density 20-50, especially 26-32 kg/m$^3$. When the hollow member 10 is moved to the right as drawn with respect to ring 12, the foam 20 will simply become compressed, but the cement, which is not compressible, must move outwards to seal the hollow member to a surrounding wall. The cement can preferably move readily through the cells of the foam under intentional compression, but will not be displaced simply by gravity or careless handling. Where a foam 20 is used that may be impregnated with cement, rather than merely trap a layer of cement underneath it, the method steps illustrated in Figure 3 and 4 will not be necessary. Hence the device of the invention may be supplied with each end of the foam secured in place, i.e. one end secured to a sliding ring 12 etc and the other end secured against movement relative to the hollow member.

A technique by which a device of the invention may be re-entered is shown in Figures 9, 10 and 11. Here a cable 7 selaed to a wall 1 by a device of the invention 10 is removed, and the same or a new cable is later sealed to the wall. In Figure 9 a knife 21 is used to cut an end portion of the hollow member 10 at the dotted line to separate a portion thereof that engages the cable 7 from the remainder. For example an end portion may have been shrunk and optionally bonded to the cable, and a cut is made to the left of this portion. The cable is then removed.

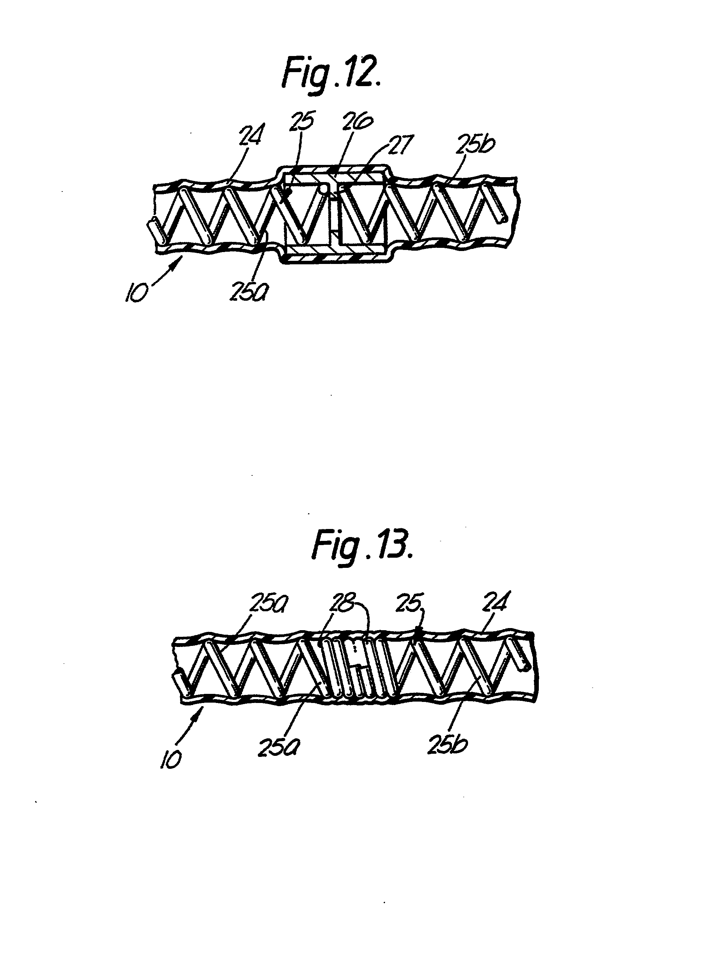

In Figure 10 a part 22 of a support of the hollow member 10 is removed, in order to allow shrinkage of its new end. The new cable is inserted and the new end is shrunk down using a torch 23 as shown in Figure 11.

Preferred designs of hollow member 10 are shown in Figures 12 and 13. The design of Figure 12 is preferably used at the right hand side of the device (as drawn in Figures 2-8) where a stop ring is required, and the design of Figure 13 is preferably used at the left hand side where a stop ring is not required. In each design, the hollow member includes a tubular member 24, for example a heat-shrinkable polymeric sleeve supported at least at an intermediate portion thereof by a support member 25, in the form for example of a coil. The coil is provided in two or more parts 25a and 25b, in order that one part may be removed to allow a further end portion of the tube 24 to be shrunk down after re-entry, as shown in Figures 10 and 11.

In Figure 12 a guide is provided for the two ends of the coil, in the form of a tube 26 within which the ends of the coils are positioned. The tube 26 may have an internal protrusion, for example a circumferential ridge 27, against which each part of the coil abuts. The tube 26 produces in the sleeve 24 a region of larger diameter which may serve as the stop ring 14 shown in Figure 2. The guide 26 may be of any suitable material, and we prefer high density polyethylene. It may be injection moulded.

Where a region of larger diameter is not required, for example on the left hand side of the article (as drawn) where no stop ring 14 is required, the two parts of the coil, 25a and 25b, may simply abut as shown in Figure 13. Here the ends 28 of the parts of he coils are specially shaped so they may abut one another.

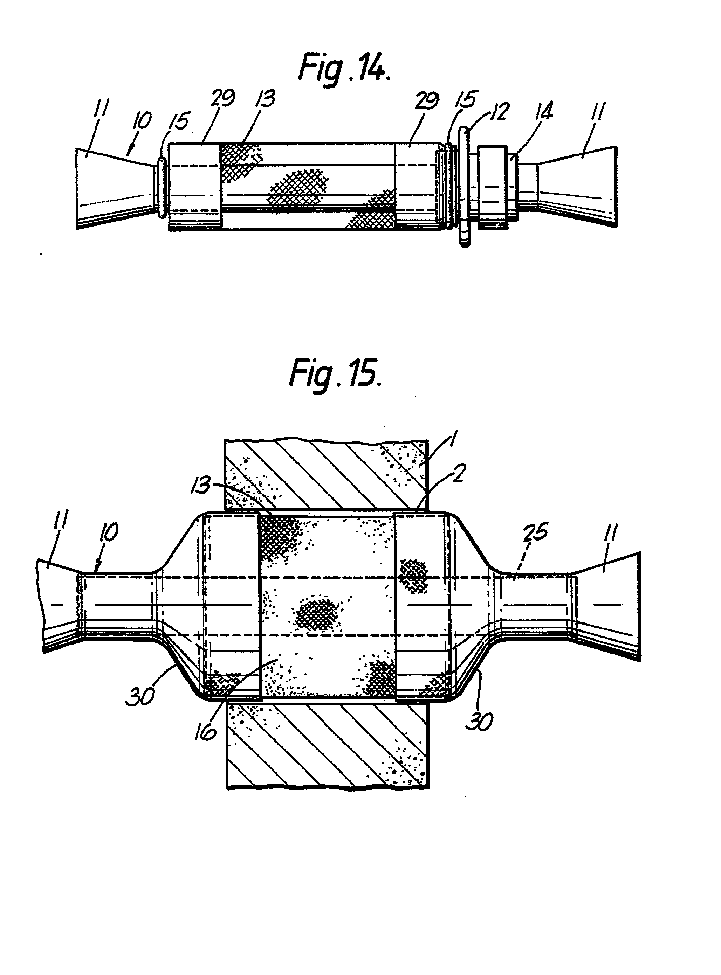

Figure 14 shows a modification of the embodiment shown in Figures 2-7, but here the means for retaining 13 comprises a sleeve that is only partially in the form of a mesh. End portions 29 of the means 13 have no holes and thus the region where the sealing material is able to be displaced outwards is limited to an intermediate portion of the hollow member. It may be desirable that the end portions 29 extend into the duct in order to ensure retention of sealing material within the duct. In this case, it will not be necessary that the slidable ring 12 be held close to the end of the duct. Instead of end portions 29 of the mesh 13 having no holes, separate non-perforate sleeves may be provided over end portions of a mesh 13 as shown in Figures 2-7.

In Figure 14 end portions 29 of the means 13, or separate non-perforate sleeves may be used to drive the sealing material 16 in the desired direction. Such separate sleeves 30 are shown in Figure 15, and may for example be heat recoverable, and may also extend over the cable to be sealed and thus recovery may cause displacement of the sealing material 16 and sealing engagement to the cables.

Figure 16 shows a way in which the sealing material 16 may be retained under some compression. The sliding ring 12 is provided with means to prevent undesired relative movement between it and the hollow member 10. A catch, in the form of a plurality of fingers 31 extends from an annular part of the ring 12 down onto the surface of the hollow member 10 such that they engage protrusion 32 for example helical ribs formed by an internal coil 25 as shown in Figures 12 and 13. The fingers may be resiliently biased against the ribs to prevent the ring 12 sliding back along the hollow member 10.

For the avoidance of doubt it is here stated that the invention provides a technique of sealing a duct seal or a feedthrough to a duct through which it passes by deforming a sealing material into a space within the duct around the feedthrough.

## Claims

1. A device which can be sealed to a duct through which it passes, which comprises:

a hollow member that can be positioned within the duct, which hollow member then provides a passage through the duct; and a mesh for mechanically retaining a sealing material that seals a space between the hollow member and the duct;

said mesh being capable of mechanically retaining the sealing material on an outer surface of the hollow member and being capable of allowing deformation of the sealing material to a configuration to seal the space between the hollow member and the duct.

2. A device according to claim 1, wherein the mesh is capable of allowing deformation of the sealing material to a configuration of greater extension away from the said outer surface of the hollow member, to effect said sealing.

3. A device according to claim 1 or 2, in which the mesh is capable of retaining a sealing material having a plasticity as defined by the Cone D'Abrams test of 2–28 cms.

4. A device according to claim 1, 2 or 3, in which the mesh comprises a substantially two-dimensional net or a foam.

5. A device according to claim 4, in which the mesh is in substantially tubular form having an internal diameter at least as large as the external diameter of the hollow member, the device additionally comprises means for fixing an end of the mesh to, and substantially concentric with, the hollow member such that passage of sealing material along the hollow member past that end is restricted.

6. A device according to any preceding claim, which additionally comprises means to which a part of the retaining means is attached and which allows that part to be moved along the hollow member, said movement causing said deformation of the sealing material.

7. A device according to claim 6, in which the means to which a part of the retaining means is attached comprises a ring which can be slid along the hollow member, substantially concentric with the hollow member, and the hollow member has a region of larger diameter past which said ring is unable to slide in normal use.

8. A device according to claim 6 or 7, in which the means to which a part of the retaining means is attached, has means which restrict its movement in one direction along the hollow member.

9. A device according to any preceding claim, which additionally comprises means for deforming the sealing material.

10. A method of sealing a duct, which comprises:

applying a sealing material to an outer surface of a hollow member;

mechanically retaining said sealing material on the outer surface by a mesh;

positioning the hollow member and the sealing material within the duct; and deforming the sealing material to a configuration to seal a space between the surface and the duct.

11. A method according to claim 10, wherein the step of deformation deforms the sealing material to a configuration of greater extension away from the outer surface of the hollow member.

## Patentansprüche

1. Vorrichtung zum dichtenden Anschluß an eine Durchführung, durch die sie geführt ist, mit:

einem Hohlteil zur Anordnung im Inneren der Durchführung, das anschließend einen Kanal durch die Durchführung bildet; und einem Gitter zur mechanischen Rückhaltung einer Dichtmasse, die den freien Raum zwischen dem Hohlteil und der Durchführung abdichtet;

wobei das Gitter zur mechanisohen Rückhaltung der Dichtmasse auf einer Außenfläche des Hohlteils geeignet ist und eine Verformung der Dichtmasse in eine Form gestattet, in der der freie Raum zwischen dem Hohlteil und der Durchführung dicht abgeschlossen ist.

2. Vorrichtung nach Anspruch 1, bei der das Gitter zur Herbeiführung der Dichtwirkung eine Verformung der Dichtmasse in eine Form gestattet, die sich von der Außenfläche des Hohlteils weiter weg erstreckt.

3. Vorrichtung nach Anspruch 1 oder 2, bei der das Gitter zur Rückhaltung einer Dichtmasse geeignet ist, deren Plastizität nach dem Cone d'Abrams-Versuch im Bereich zwischen 2 und 28 cms liegt.

4. Vorrichtung nach Anspruch 1, 2 oder 3, bei der das Gitter ein im wesentlichen zweidimensionales Netz oder einen Schaum umfaßt.

5. Vorrichtung nach Anspruch 4, bei der die Form des Gitters im wesentlichen rohrförmig ist und das Gitter einen Innendurchmesser aufweist, der mindestens genauso groß wie der Außendurchmesser des Hohlteils ist, wobei die Vorrichtung zusätzlich eine Einrichtung zur Befestigung eines Endes des Gitters am Hohlteil im wesentlichen konzentrisch zu diesem in der Weise aufweist, daß der Durchtritt der Dichtmasse entlang des Hohlteils über dieses Ende hinaus eingeschränkt ist.

6. Vorrichtung nach einem der vorhergehenden Ansprüche, die zusätzlich eine Einrichtung aufweist, an der ein Teil der Rückhalteeinrichtung befestigt ist und die eine Bewegung dieses Teils entlang des Hohlteils gestattet, wobei die Bewegung zur Verformung der Dichtmasse führt.

7. Vorrichtung nach Anspruch 6, bei der die Einrichtung, an der ein Teil der Rückhalteeinrichtung befestigt ist, einen Ring aufweist, der sich entlang des Hohlteils im wesentlichen konzentrisch zu diesem verschieben läßt, während das Hohlteil einen Bereich mit größerem Durchmesser aufweist, über den hinaus der Ring im normalen Einsatzfall nicht hinausgleiten kann.

8. Vorrichtung nach Anspruch 6 oder 7, bei der die Einrichtung, an der ein Teil der Rückhalteeinrichtung befestigt ist, eine Einrichtung aufweist, die ihre Bewegung in einer Richtung entlang des Hohlteils einschränkt.

9. Vorrichtung nach einem der vorhergehenden Ansprüche, die außerdem eine Einrichtung zum Verformen der Dichtmasse aufweist.

10. Verfahren zur Abdichtung einer Durchführung, das folgende Schritte aufweist:

Aufbringen einer Dichtmasse auf eine Außenfläche eines Hohlteils; mechanische Rückhaltung der Dichtmasse auf der Außenfläche durch ein Gitter;

Positionieren des Hohlteils und der Dichtmasse im Inneren der Durchführung; und Verformen der Dichtmasse in eine Form, in der sie einen freien Raum zwischen der Oberfläche und der Durchführung abdichtet.

11. Verfahren nach Anspruch 10, bei dem in dem Arbeitsschritt der Verformung die Dichtmasse in eine Form gebracht wird, die sich von der Außenfläche des Hohlteils weiter weg erstreckt.

## Revendications

1. Dispositif dont l'étanchéité peut être assurée par rapport à un conduit à travers lequel il passe, ce dispositif comprenant un pièce creuse qui peut être disposée à l'intérieur du conduit, cette pièce creuse fournissant alors un passage à travers le conduit, et un élément perforé servant à retenir mécaniquement une matière d'étanchéité qui assure l'étanchéité d'un espace situé entre la pièce creuse et le conduit, cet élément perforé étantsusceptible de retenir mécaniquement la matière d'étanchéité sur une surface extérieure de la pièce creuse et étant susceptible de permettre une déformation de cette matière d'étanchéité de façon qu'elle adopte une configuration permettant d'assurer l'étanchéité de l'espace situé entre la pièce creuse et le conduit.

2. Dispositif suivant la revendication 1, dans lequel l'élément perforé est susceptible de permettre une déformation de la matière d'étanchéité de façon qu'elle adopte une configuration d'une plus grande étendue dans le sens s'éloignant de la surface extérieure de la pièce creuse, de façon à réaliser ladite étanchéité.

3. Dispositif suivant la revendication 1 ou 2, dans lequel l'élément perforé est capable de retenir une manière d'étanchéité possédant une plasticité, telle que définie par l'essai du Cône d'Abrams, de 2 à 28 cm.

4. Dispositif suivant la revendication 1, 2 ou 3, dans lequel l'élément perforé est constitué d'un filet sensiblement à deux dimensions ou d'une mousse.

5. Dispositif suivant la revendication 4, dans lequel l'élément perforé se présente sous une forme sensiblement tubulaire possédant un diamètre intérieur au moins aussi grand que le diamètre extörieur que la pièce creuse, le dispositif comprenant en outre des moyens permettant de fixer une extrémité de l'élément perforé sur la pièce creuse et d'une manière sensiblement concentrique à celle-ci, de façon à restreindre le passage offert à la matière d'étanchéité le long de la pièce creuse devant cette extrémité.

6. Dispositif suivant l'une quelconque des revendications précédentes, comprenant en outre des moyens auxquels une partie des moyens de retenue est fixée et qui permettent que cette partie se déplace le long de la pièce creuse, ce déplacement provoquant ladite déformation de la matière d'étanchéité.

7. Dispositif suivant la revendication 6, dans lequel les moyens quxquels une partie des moyens de retenue est fixée sont constitués par un anneau qui peut coulisser le long de la pièce creuse, d'une manière sensiblement concentrique à celle-ci, tandis que cette pièce creuse comporte une zone de plus grand diamètre devant laquelle l'anneau n'est pas capable de coulisser en cours d'utilisation normale.

8. Dispositif suivant la revendication 6 ou 7, dans lequel les moyens auxquels une partie des moyens de retenue est fixée comportent des moyens qui restreignent son déplacement dans un sens, le long de la pièce creuse.

9. Dispositif suivant l'une quelconque des revendications précédentes, qui comprend en outre des moyens permettant de déformer la matière d'étanchéité.

10. Procédé permettant d'assurer l'étanchéité d'un conduit, ce procédé consistant à appliquer une matière d'étanchéité sur la surface extérieure d'une pièce creuse, à retenir mécaniquement cette matière d'étanchéité sur cette surface extérieure au moyen d'un élément perforé, à disposer la pièce creuse et la matière d'étanchéité à l'intérieur du conduit et à déformer la matière d'étanchéité de façon qu'elle adopte une configuration permettant d'assurer l'étanchéité de l'lespace situé entre la surface et le conduit.

11. Procédé suivant la revendication 10, selon lequel l'opération de déformation déforme la matière d'étanchéité de manière qu'elle adopte une configuration de plus grande étendue dans le sens s'éloignant de la surface extérieure de la pièce creuse.

# Fig.1.

PRIOR ART

# Fig.8.

# Fig.16.

Fig. 2.

Fig. 3.

Fig. 4.

Fig.5.

Fig.6.

Fig.7.

Fig. 9.

Fig. 10.

Fig. 11.

## Fig.12.

## Fig.13.

## Fig .14.

## Fig .15.